# EUROPÄISCHE PATENTSCHRIFT

(11) **EP 1 289 227 B1**
(45) Veröffentlichungstag und Bekanntmachung des Hinweises auf die Patenterteilung: **23.03.2005**
(21) Anmeldenummer: 02102206.6
(22) Anmeldetag: 22.08.2002
(51) Int. Cl.: H04L 29/06

(54) **Verfahren, System und Rechner zum Aushandeln einer Sicherheitsbeziehung auf der Anwendungsschicht**
Method, system and computer for negotiating a security association at application layer
Procédé, système et ordinateur pour négocier une association de sécurité au niveau de la couche d'application

(30) Priorität: 03.09.2001 DE 10142959
(43) Veröffentlichungstag der Anmeldung: 05.03.2003
(73) Patentinhaber: SIEMENS AKTIENGESELLSCHAFT, 80333 München (DE)
(72) Erfinder: Kröselberg, Dirk, 81549 München (DE)

(56) Entgegenhaltungen:
- US-A- 6 055 236
- US-A1- 2001 009 025

## Beschreibung

Heutige Kommunikationssysteme basieren üblicherweise auf dem sogenannten OSI-Schichtenmodell (Open System Interconnection-Schichtenmodell), welches unterschiedliche Aufgaben im Rahmen der Kommunikation zwischen Rechnern auf unterschiedlichen Kommunikationsschichten verteilt.

Das hierarchisch strukturierte OSI-Schichtenmodell enthält unter anderem die sogenannte Anwendungsschicht, auf der übliche Anwendungsprotokolle wie beispielsweise zur Kommunikation zwischen elektronischen Mailprogrammen, Internet-Browser-Programmen oder auch anderen Anwendungsprogrammen ausgeführt werden.

Hierarchisch darunter angeordnet sind die sogenannten Netzwerkschichten, die für die transparente Kommunikation zwischen miteinander kommunizierenden Rechnern und möglicherweise in einer Kommunikationsverbindung dazwischen liegenden Vermittlungsrechnern zuständig sind. Beispiele für Netzwerkschichten sind Schichten, welche eine Kommunikation zwischen Rechnern gemäß dem Internet Protocol (IP) oder gemäß dem Transport Control Protocol (TCP) oder auch gemäß dem User Datagram Protocol (UDP) bereitstellen.

Bekannte, das Internet Protocol (IP) auf der OSI-Schicht 3 nutzende Anwendungsprotokolle der Schicht 7 stellen neben ihrer Kernfunktionalität üblicherweise einen mehr oder weniger umfangreichen Satz an Sicherheitsmechanismen zum Schutz der über das Anwendungsprotokoll (Protokoll auf der Ebene der Anwendungsschicht in dem OSI-Schichtenmodell) abgewickelten Kommunikation zur Verfügung. Unter den dabei zu erreichenden Sicherheitszielen sind die Authentifikation der Nachrichten gemäß dem Anwendungsprotokoll sowie deren Integrität und Vertraulichkeit von sehr hoher Bedeutung.

Bisher sind für das Erreichen dieser Sicherheitsziele zwei Möglichkeiten bekannt.

Einerseits kann das Anwendungsprotokoll selbst gesichert werden, das heißt es kann eine kryptographische Sicherung auf der Ebene der Anwendungsschicht erfolgen. Da ein solches Anwendungsprotokoll auf der Basis von IP hierarchisch betrachtet über der Netzwerkschicht abläuft, spricht man in diesem Fall auch von einer gewährleisteten Sicherheit auf der Ebene der Anwendungsschicht. Hierfür sind üblicherweise Modifikationen des Anwendungsprotokolls selbst erforderlich oder die Sicherheitsmechanismen sind bereits in der Spezifikation des jeweiligen Anwendungsprotokolls enthalten.

Andererseits ist es bekannt, die Anwendungsprotokolle in einer der unter der Anwendungsschicht liegenden Netzwerkschichten, zum Beispiel gemäß dem IP oder dem TCP zu sichern. Als Lösung für die Sicherung auf der Ebene der Netzwerkschicht, anders ausgedrückt auf Netzwerkebene, sind die Architektur gemäß IPsec (vgl. [1]) oder das TLS (Transport Layer Security) Sicherheit auf der Transportebene) bekannt.

IPsec stellt eine Erweiterung des Internet Protocol Kommunikationsprotokolls der OSI-Schicht 3 dar, durch welche Erweiterungen Sicherheitsdienste auf der Ebene der Netzwerkschicht bereitgestellt werden. Gemäß dem IPsec-Protokoll werden für jede Art von Anwendung, welche auf der Ebene der Anwendungsschicht zur Kommunikation das Protokoll gemäß IPsec der Netzwerkschicht verwendet, transparent kryptographisch gesichert.

Wie in [1] beschrieben ist, wird für IPsec zur Sicherung der übertragenen Nutzdaten das Encapsulating Security Payload-Protokoll (ESP), insbesondere zur Authentifikation und zur Verschlüsselung, verwendet und zur reinen Authentifikation der Kommunikationspartner wird das Authentication Header-Protokoll (AH) verwendet.
Im Rahmen des Sicherheitsprotokolls IPsec werden sogenannte Sicherheitsbeziehungen zwischen den miteinander kommunizierenden Rechnern verwendet (Security Associations, SA).

Unter einer solchen Sicherheitsbeziehung ist im Folgenden eine Menge von Sicherheitsparametern für eine später aufzubauende Kommunikationsverbindung zu verstehen, die über das für ein kryptographisches Verfahren zu verwendende Schlüsselmaterial hinaus weitere Parameter und Sicherheitspolitikinformationen wie beispielsweise die zu verwendenden kryptographischen Algorithmen, eine maximale Lebensdauer von Schlüsseln oder eine maximale Lebensdauer der Sicherheitsbeziehung selbst oder auch Identifikationsdaten zur Identifizierung der Kommunikationspartner enthalten.

Ferner können in der Sicherheitsbeziehung insbesondere die in [2] definierten kryptographischen Parameter enthalten sein, von denen im Folgenden eine Auswahl aufgeführt wird.

Es können zum Beispiel in der Sicherheitsbeziehung enthalten sein:
- Ein Sicherheitsparameter-Index, mit dem die Sicherheitsbeziehung zwischen zwei miteinander kommunizierenden Instanzen, vorzugsweise miteinander kommunizierenden Rechnern jeweils eindeutig identifiziert wird,
- ein Sicherheitsbeziehungslebenstyp, mit dem die Einheit angegeben wird, in der die Lebensdauer der Sicherheitsbeziehung gemessen wird, wahlweise Sekunden oder Kilobyte,
- eine Sicherheitsbeziehungs-Lebensdauer, anders ausgedrückt die Angabe eines Zeitpunkts oder einer Zeitdauer bis zu dem bzw. während der die angegebene Sicherheitsbeziehung für eine Kommunikation zwischen den beiden zugehörigen Instanzen gültig ist und somit die angegebenen Sicherheitsparameter für eine Kommunikation verwendet werden können,
- eine Angabe eines in einer späteren Kommunikationsverbindung unter Verwendung dieser Sicherheitsbeziehung zu verwendender Verschlüsselungsalgorithmus, der gemäß dem ESP verwendet wird,
- eine Angabe über einen im Rahmen einer späteren Kommunikationsverbindung zu verwendender Authentifikationsalgorithmus,
- eine Angabe über die Schlüssellänge,
- eine Angabe über möglicherweise vorhandene einzusetzende Schlüsselringe.

In [3] und [4] sind Protokolle beschrieben zur Aushandlung von Sicherheitsbeziehungen. Diese eigenständigen Protokolle, die unabhängig von einem Anwendungsprotokoll ablaufen, sind sehr aufwendig und rechenintensiv und somit für eine Implementierung in einer lediglich eine geringe Rechenleistung aufweisenden Kommunikationseinrichtung, insbesondere in einem mobiles Kommunikations-Endgerät, nicht geeignet.

Des weiteren ist gemäß den in [3] und [4] beschriebenen Verfahren eine eigenständige Kommunikation erforderlich zur Aushandlung der Sicherheitsbeziehungen.

Im Weiteren werden zur Veranschaulichung der oben beschriebenen Nachteile der in [3] und [4] beschriebenen Verfahren diese kurz skizziert.

Das Protokoll gemäß [3] weist zwei Phasen auf. In einer ersten Phase wird eine sogenannte IKE-Sicherheitsbeziehung, anders ausgedrückt ein kryptographisch gesicherter Kommunikationskanal zwischen zwei miteinander kommunizierenden Rechnern erzeugt. Auf der Basis der IKE-Sicherheitsbeziehung kann im Anschluss eine zweite Phase ausgeführt werden, während der die eigentlichen IPsec-Sicherheitsbeziehungen generiert werden. Gemäß [3] ist in der ersten Phase die Verwendung des sogenannten "Diffie-Hellman Key Exchange"-Protokolls erforderlich, welches aufwendige asymmetrische kryptographische Berechnungen in den Rechnern erforderlich macht.

Insbesondere die derzeitige Leistungsfähigkeit von Prozessoreinheiten in mobilen Kommunikations-Endgeräten wie Mobilfunktelefonen steht einer effizienten Anwendung dieses Verfahrens entgegen. Weiterhin ist anzumerken, dass das IKE-Protokoll auf dem umfangreichen ISAKMP-Standard basiert. Insgesamt ist die Implementierung von IKE sehr aufwendig und fehleranfällig, womit das Protokoll als nur sehr schlecht geeignet ist für Kommunikations-Endgeräte mit nur geringer Rechenleistung.

Das in [4] beschriebene, als KINK-Protokoll bezeichnete Protokoll setzt die Verwendung von dem sogenannten Kerberos-Standard voraus. Dieser ist ebenfalls sehr umfangreich und aufwendig und eher ineffizient bei dessen Implementierung auf einem mobilen Kommunikations-Endgerät mit geringer Rechenleistung.

Weiterhin ist als ein Anwendungsprotokoll beispielsweise das sogenannte Session Initiation Protocol (SIP), wie es in [5] beschrieben ist, bekannt. Das SIP ist ein Protokoll, welches auf der Ebene der Anwendungsschicht definiert ist und die Signalisierung zur Steuerung von Kommunikationssitzungen spezifiziert. Von SIP gesteuerte Kommunikationssitzungen sind zum Beispiel Telefonate oder Multimedia-Konferenzen über das Internet. Das SIP verwendet entweder "Request"-Nachrichten von einem Client zu einem Server, im Weiteren auch bezeichnet als Anforderungsnachricht, oder "Response"-Nachrichten von einem Server zum Client, im Weiteren auch bezeichnet als Antwort-Nachrichten.

Ein weiteres Protokoll auf der Anwendungsschicht ist das Hypertext Transfer Protocol (HTTP).

In [6] ist für ein zukünftiges UMTS-Protokoll beschrieben, dass unter Verwendung des SIP zwischen einem mobilen Kommunikations-Endgerät und einem Mobilfunknetz-Rechner ausgehandelt wird, welcher Algorithmus zum Schutz der Integrität eingesetzt werden soll. Diese Vorgehensweise ist für die praktische Umsetzung nur in sehr geringem Maß geeignet, da die Beschränkung auf die Aushandlung eines Algorithmus, welcher in einer zukünftigen Kommunikationsverbindung zum Schutz der Integrität eingesetzt werden soll, nicht ausreichend ist, um heutigen Anforderungen im Rahmen einer mobilen Multimedia-Kommunikation heutigen Anforderungen zu genügen.

Aus der US 2001/0009025 A1 ist ein Virtuelles Privates Netzwerk (VPN) bekannt, bei dem eine oder mehrere Sicherheitsbeziehung zwischen einem mobilen Endgerät und einem korrespondierenden Endgerät des Virtuellen Privaten Netzwerks ausgehandelt werden, nachfolgend eine Kommunikation zwischen dem mobilen Endgerät und einer Gateway initiiert wird sowie ein Authentisierungszertifikat zu dem Gateway gesandt wird, wobei das Zertifikat zumindest derjenigen Sicherheitsbeziehung enthält, welche für nachfolgende Kommunikation zwischen dem mobilen Endgerät und dem korrespondierenden Endgerät genutzt werden soll. Dabei werden Datenpakete nur weitergeleitet, wenn sie von durch das Gateway authentifiziert worden sind.

Somit liegt der Erfindung das Problem zugrunde, eine Sicherheitsbeziehung auf Anwendungsschicht zwischen zwei Rechnern auszuhandeln, welche einfach implementierbar ist und flexibler ausgestaltet ist als das in [6] beschriebene Verfahren.

Das Problem wird durch das Verfahren, das System und die Rechner zum Aushandeln einer Sicherheitsbeziehung auf der Anwendungsschicht mit den Merkmalen gemäß den unabhängigen Patentansprüchen gelöst.

Bei einem Verfahren zum rechnergestützten Aushandeln einer Sicherheitsbeziehung auf der Anwendungsschicht zwischen einem ersten Rechner und einem zweiten Rechner, wobei der erste Rechner und der zweite Rechner über ein Telekommunikationsnetz miteinander gekoppelt sind, überträgt der erste Rechner in einer Nachricht gemäß einem Protokoll der Anwendungsschicht eine Liste möglicher Sicherheitsbeziehungen zwischen dem ersten Rechner und dem zweiten Rechner an den zweiten Rechner. Zu jeder in der Liste enthaltenen Sicherheitsbeziehung ist in der Nachricht ein Sicherheitsparameter-Index enthalten. Jeder Sicherheitsparameter-Index ist einer in der Liste enthaltenen Sicherheitsbeziehung zugeordnet, wobei mittels des Sicherheitsparameter-Index jede Sicherheitsbeziehung der Liste im Rahmen deren späterer Anwendung eindeutig identifizierbar ist. Mit der Sicherheitsbeziehung werden kryp tographische Parameter bestimmt, welche in einer unter Verwendung der Sicherheitsbeziehung im Weiteren aufzubauende, kryptographisch gesicherte Kommunikationsverbindungen zwischen dem ersten Rechner und dem zweiten Rechner in einer Netzwerkschicht verwendet werden. Von dem zweiten Rechner wird eine Sicherheitsbeziehung ausgewählt und diese ausgewählte Sicherheitsbeziehung, oder eine Angabe über die ausgewählte Sicherheitsbeziehung wird von dem zweiten Rechner an den ersten Rechner übertragen.

Es ist anzumerken, dass es alternativ vorgesehen sein kann, nur einen Sicherheitsparameter-Index für mehrere oder für alle in der Liste enthaltenen Sicherheitsbeziehungen zu verwenden. Anders ausgedrückt bedeutet dies, dass ein Sicherheitsparameter-Index auch für mehrere in der Liste enthaltenen Sicherheitsbeziehungen verwendet werden kann. Die eindeutige Zuordnung des Sicherheitsparameter-Index zu der ausgewählten Sicherheitsbeziehung erfolgt aufgrund der Auswahl der Sicherheitsbeziehung selbst. Nach erfolgter Auswahl wissen beide Rechner, welche Sicherheitsbeziehung in der Liste Verwendung finden soll. Der Sicherheitsparameter-Index wird dann der ausgewählten Sicherheitsbeziehung eindeutig zugeordnet.

In diesem Zusammenhang ist anzumerken, dass bei dem Verfahren davon ausgegangen wird, dass die Existenz eines Sitzungsschlüssels, welcher im Rahmen einer späteren Kommunikation verwendet wird, vorausgesetzt wird.

Der Sicherheitsparameter-Index ist anschaulich ein Zeiger auf die Datenstruktur und damit eindeutiger Bezeichner der Datenstruktur, welche die jeweilige Sicherheitsbeziehung beschreibt.

Unter einer Sicherheitsbeziehung ist im Folgenden eine Menge von Sicherheitsparametern für eine später aufzubauende Kommunikationsverbindung zu verstehen, die über das für ein kryptographisches Verfahren zu verwendende Schlüsselmaterial hinaus weitere Parameter und Sicherheitspolitikinformationen wie beispielsweise die zu verwendenden kryptographischen Algorithmen, eine maximale Lebensdauer von Schlüsseln oder eine maximale Lebensdauer der Sicherheitsbeziehung selbst oder auch Identifikationsdaten zur Identifizierung der Kommunikationspartner enthalten.

Ein System zum rechnergestützten Aushandeln einer Sicherheitsbeziehung auf der Anwendungsschicht zwischen einem ersten Rechner und einem zweiten Rechner, wobei der erste Rechner und der zweite Rechner über ein Telekommunikationsnetz miteinander gekoppelt sind, weist den ersten sowie den zweiten Rechner und das die beiden Rechner miteinander koppelnde Telekommunikationsnetz auf. Die beiden Rechner weisen jeweils eine Prozessoreinheit auf, die derart eingerichtet sind, dass die oben beschriebenen Verfahrensschritte durchführbar sind.

Ferner werden erfindungsgemäß sowohl der erste Rechner als auch der zweite Rechner bereitgestellt, die jeweils derart eingerichtet sind, dass die jeweils auf ihrer Seite (Senderseite bzw. Empfängerseite) durchzuführende Verfahrensschritte des oben beschriebenen Verfahrens durchführbar sind.

Insbesondere durch den Einsatz des Sicherheitsparameter-Index in dem Austausch der Nachrichten zur eindeutigen Identifikation ausgehandelter bzw. ausgewählter Sicherheitsbeziehungen wird eine sehr effiziente Implementierung des Aushandelns einer Sicherheitsbeziehung zwischen zwei Rechnern ermöglicht. Aus diesem Grund eignet sich die Erfindung insbesondere für den Einsatz in einem technischen Gebiet, in dem zumindest einer der beiden Kommunikationspartner, das heißt einer der beiden Rechner, lediglich eine geringe Rechenleistung aufweisen.

Somit ist das Verfahren insbesondere für ein Szenario geeignet, bei dem der erste Rechner oder der zweite Rechner ein mobiles Kommunikations-Endgerät ist und der jeweils andere Kommunikationspartner, ein Mobilfunknetz-Rechner, das heißt ein Schnittstellenrechner eines Mobilfunknetzes ist.

Gegenüber den in [3] und in [4] beschriebenen Verfahren weist die Erfindung insbesondere den Vorteil auf, dass keine eigenständigen Kommunikationsschritte oder Protokollmechanismen zusätzlich zu denen durchgeführt werden müssen, die in dem Protokoll der Anwendungsschicht, beispielsweise gemäß dem SIP standardmäßig ohnehin ablaufen. Es ist erfindungsgemäß nicht erforderlich, eines der umfangreichen Protokolle IKE oder KINK in den kommunizierenden Rechnern zu implementieren. Durch die Aushandlung der Sicherheitsbeziehung innerhalb der Anwendungsschicht unter Verwendung der Nachrichten gemäß dem Protokoll der Anwendungsschicht kann auch die erste Phase der Aushandlung unabhängig von der eigentlichen Aushandlung der Sicherheitsbeziehung gewählt werden.

Somit eignet sich die Erfindung insbesondere auch für Umgebungen und Szenarien, die aufgrund ihrer Beschränkungen bezüglich der Rechenleistung, des in den miteinander kommunizierenden Rechnern vorhandenen digitalen Speichern oder der Bandbreite zur Übertragung der Daten nicht geeignet sind, die existierenden Standardmechanismen zur Aushandlung von IPsec-Sicherheitsbeziehungen zu verwenden.

Darüber hinaus gibt es Umgebungen wie beispielsweise die mobilen Kommunikations-Endgeräte für den zukünftigen UMTS-Kommunikationsstandard, die bereits über Mechanismen zur Authentifikation und Erzeugung von Sitzungsschlüsseln verfügen. In diesem Fall kann die Erfindung unmittelbar auf diesen ohnehin schon implementierten Authentifikationsmechanismen aufsetzen. Diese schon implementierten Standardmechanismen könnten bei den in [3] und in [4] beschriebenen Verfahren nicht ausgenutzt werden, was wiederum zu einer Verteuerung in der Implementierung solcher Geräte führen würde.

Somit eignet sich die Erfindung insbesondere in einem Szenario, in dem das Telekommunikationsnetz ein Mobilfunk-Telekommunikatiosnetz ist.

Die im Weiteren beschriebenen Ausgestaltungen der Erfindung beziehen sich sowohl auf das Verfahren, das System als auch auf die Rechner und die Ausgestaltung ihrer Prozessoren.

Das mobile Kommunikations-Endgerät kann eine Registrierungsnachricht gemäß einem Protokoll der Anwendungsschicht an den Mobilfunknetz-Rechner übertragen, beispielsweise eine Registrierungs-Anforderungsnachricht gemäß dem SIP. Der Mobilfunknetz-Rechner kann eine Authentifikationsnachricht gemäß dem Protokoll der Anwendungsschicht an das mobile Kommunikations-Endgerät in Beantwortung der Registrierungsnachricht übertragen, beispielsweise wiederum gemäß dem SIP als Protokoll der Anwendungsschicht.

Nachdem der zweite Rechner die von ihm ausgewählte Sicherheitsbeziehung oder eine Angabe über die von ihm ausgewählte Sicherheitsbeziehung an den ersten Rechner übertragen hat, kann von dem ersten Rechner eine Bestätigungsnachricht an den zweiten Rechner über die ausgewählte Sicherheitsbeziehung oder die Angabe der ausgewählten Sicherheitsbeziehung übertragen werden. Die Bestätigungsnachricht enthält bevorzugt eine Kopie der Liste der Sicherheitsbeziehungen, welche gemäß den in der Sicherheitsbeziehung bestimmten kryptographischen Parametern gesichert ist, wobei vorzugsweise das in der ausgewählten Sicherheitsbeziehung definierte zu verwendende Verschlüsselungsverfahren gewählt wird, um die in der Bestätigungsnachricht enthaltene Angabe der ausgewählten Sicherheitsbeziehung und damit der jeweiligen für eine jeweilige kryptographisch zu sichernde Kommunikationsverbindung zu wählenden Sicherheitsparameter zu verschlüsseln.

Nach Empfang der Bestätigungsnachricht beim zweiten Rechner wird diese von dem zweiten Rechner verifiziert und eine im Weiteren aufzubauende Kommunikationsverbindung zum Austausch von Nutzdaten erfolgt nur, wenn die Verifikation erfolgreich war.

Durch Verwendung einer Bestätigungsnachricht wird der Grad der kryptographischen Sicherung der Kommunikationsverbindung zwischen dem ersten und dem zweiten Rechner weiter erhöht.

Zu Beginn des Verfahrens kann eine Authentifikation des ersten Rechners und des zweiten Rechners, vorzugsweise eine gegenseitige Authentifikation, erfolgen. Im Rahmen der Authentifikation kann ein Sitzungsschlüssel gebildet werden, der im Rahmen der Sicherheitsbeziehungen verwendet werden kann oder ausgehend von welchem weitere Schlüssel generiert werden, welche dann anschließend im Rahmen der Sicherheitsbeziehung und somit im Rahmen der weiteren Kommunikationsverbindungen zwischen dem ersten Rechner und dem zweiten Rechner verwendet werden können.

Wird der zur Sicherung der Daten in der gesicherten Kommunikationsverbindung verwendete Sitzungsschlüssel separat zu den Nachrichten zum Aushandeln der weiteren Parameter der Sicherheitsbeziehung gebildet, kann das zum Aushandeln der Sicherheitsbeziehung selbst verwendete Protokoll teilweise ungesichert sein, ohne dass daraus eine Gefahr für die kryptographische Sicherheit in der gesicherten Kommunikationsverbindung entsteht. Ein weiterer Vorteil in der Verwendung des UMTS-AKA-Protokolls ist, dass nunmehr ein eigentlich schon standardisiertes Protokoll eingesetzt werden kann, was zu einer sehr kostengünstigen Implementierung der Erfindung führt.

Durch Verwendung eines von dem Sitzungsschlüssel abgeleiteten Schlüssels bei der Verschlüsselung der Daten in der gesicherten Kommunikationsverbindung wird der Grad der kryptographischen Sicherheit weiter erhöht.

Als Format für die Codierung der Sicherheitsbeziehungen in dem SIP wird gemäß einer bevorzugten Ausgestaltung der Erfindung das in [3] beschriebene Format verwendet. Dieses Format ermöglicht eine standardisierte, schon verbreitete und sehr effiziente Darstellung von Sicherheitsbeziehungen.

Das Protokoll der Anwendungsschicht kann das SIP oder das HTTP sein.

Insbesondere das SIP zeichnet sich im Rahmen der Erfindung durch eine sehr einfache Implementierbarkeit und ein sehr einfaches und somit sehr effizientes Protokoll für das Aushandeln einer Sicherheitsbeziehung aus.

Weiterhin kann sich die Sicherheitsbeziehung auf lediglich unidirektionale Kommunikationsverbindungen beziehen, wodurch es möglich ist, sehr feingranular die Kommunikationsverbindungen kryptographisch zu sichern und somit auch für jede Kommunikationsrichtung einen unterschiedlichen, gewünschten und an die Anforderungen an die Sicherheit einer jeweiligen Kommunikationsverbindung anpassbaren Grad an kryptographischer Sicherheit zu gewährleisten, wodurch eine weitere, kommunikationsrichtungs-abhängige Optimierung der kryptographischen Sicherheit hinsichtlich der verfügbaren Rechenleistung und der verfügbaren Bandbreite der übertragbaren Daten ermöglicht wird.

Weiterhin ist es gemäß einer Ausgestaltung der Erfindung vorgesehen, den Strukturparameter-Index in dem Signalisierungsteil, das heißt in dem Header der SIP-Nachricht zu übertragen.

Es ist in diesem Zusammenhang anzumerken, dass die Erfindung für jedes Protokoll der Anwendungsschicht geeignet ist und somit in einem solchen eingesetzt werden kann, welches Anforderungsnachrichten und Antwortnachrichten zwischen zwei Rechnern, das heißt zwischen zwei miteinander kommunizierenden Kommunikationselementen, bereitstellt.

Anschaulich kann die Erfindung darin gesehen werden, dass durch Einsatz eines Strukturparameter-Index beim Aushandeln von Sicherheitsbeziehungen auf der Ebene der Anwendungsschicht für eine Kommunikationssicherung auf der Ebene der Netzwerkschicht zu verwendende Sicherheitsparameter sehr einfach, mit einer sehr geringen Datenrate und somit sehr kosteneffizient ermöglicht ist.

Ausführungsbeispiele der Erfindung sind in den Figuren dargestellt und werden im Weiteren näher erläutert.

Es zeigen
- Figuren 1a bis 1c: das System zum Aushandeln einer Sicherheitsbeziehung gemäß einem ersten Ausführungsbeispiel der Erfindung sowie in Form eines Nachrichtenflussdiagramms die zwischen den Rechnern des Systems übertragenen Nachrichten;
- Figuren 2a bis 2c: das System zum Aushandeln einer Sicherheitsbeziehung gemäß einem zweiten Ausführungsbeispiel der Erfindung sowie in Form eines Nachrichtenflussdiagramms die zwischen den Rechnern des Systems übertragenen Nachrichten;

Für die beiden weiteren beschriebenen Ausführungsbeispiele wird davon ausgegangen, dass das Kommunikationssystem auf dem Mobilfunk-Kommunikationsstandard UMTS (Universal Mobile Telecommunication System), entsprechend den bekannten 3GPP-Spezifikationen, basiert.

Wie in den 3GPP-Spezifikationen des UMTS-Standards ab Version 5 beschrieben, ist ein auf dem IP-Protokoll basierendes Multimedia-Subsystem (IP based Multimedia Subsystem, IMS) definiert, welches auf dem Internet-Protokoll basierende Multimedia-Dienste anbietet, das heißt bereitstellt und in diesem Zusammenhang das Session Initiation Protocol (SIP) als Signalisierungsprotokoll zur Steuerung der einzelnen Kommunikationssitzungen verwendet.

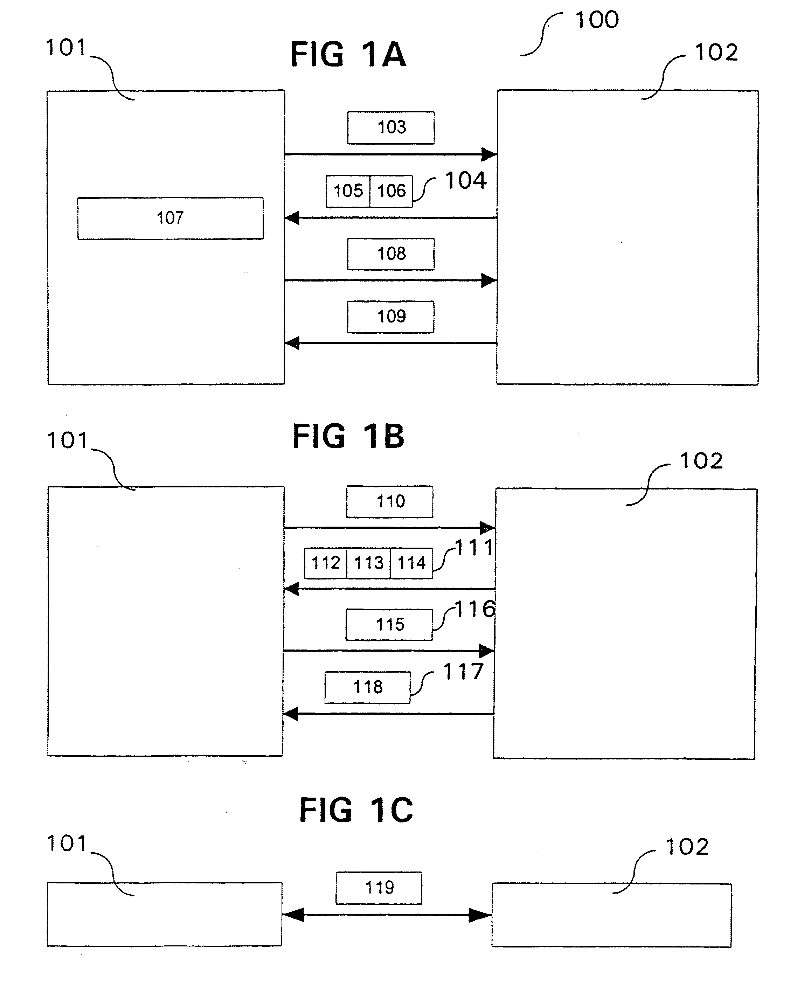

Wie in dem in den **Fig.1a** bis **Fig.1c** gezeigten UMTS-System 100 dargestellt, weist dieses unter anderem ein mobiles Kommunikations-Endgerät 101 sowie einen Mobilfunknetz-Rechner 102, gemäß diesem Ausführungsbeispiel ausgestaltet als Proxy-CSCF (Proxy-Call State Control Function), auf.

In dem mobilen Kommunikations-Endgerät ist ein sogenannter SIP-User Agent, das heißt ein mobiler Agent in Form eines Computerprogramms implementiert.

Wie auch gemäß dem 3GPP-Standard ist auf der Mobilfunknetzseite ein Proxy-Rechner, der sogenannte P-CSCF realisiert, der die benötigte SIP-Funktionalität bereitstellt und sowohl mit dem User Agent als auch mit dem Heimatnetz des Benutzers des mobilen Kommunikations-Endgeräts über das Mobilfunk-Kommunikationsnetz in Verbindung steht, wie dies in [7] beschrieben ist.

Wie in **Fig.1a** dargestellt ist, findet im Rahmen der Registrierung des mobilen Kommunikations-Endgeräts 101 in einer Authentifikationsphase mit dem IMS, insbesondere über den Mobilfunk-Rechner 102 eine gegenseitige Authentifikation gemäß dem in [8] beschriebenen UMTS-AKA-Protokoll statt.

Im Rahmen dieser Authentifikation werden zwischen dem mobilen Kommunikations-Endgerät 101 und dem Mobilfunk-Rechner 102 ein gemeinsamer Sitzungsschlüssel gebildet und jeweils von den beiden Rechnern gespeichert.

Wie in **Fig.1a** gezeigt ist, wird im Rahmen der Authentifikationsphase gemäß dem UMTS-AKA-Protokoll eine Registrierungs-Anforderungsnachricht 103 von dem mobilen Kommunikations-Endgerät zu dem Mobilfunknetz-Rechner 102 übertragen und dort empfangen und decodiert.

In Antwort darauf überträgt der Mobilfunknetz-Rechner 102 nach erfolgter Identifizierungs-Rückfrage im Heimatnetz des Benutzers gemäß dem UMTS-Standard des mobilen Kommunikations-Endgeräts 101 eine Authentifikations-Anforderungsnachricht 104 zu dem mobilen Kommunikations-Endgerät 101, wobei die Authentifikations-Anforderungsnachricht 104 eine Zufallszahl 105 sowie eine Authentifikations-Identifizierungsangabe 106 enthält. Unter Verwendung der Zufallszahl 105 wird von dem Mobilfunknetz-Rechner 102 der Sitzungsschlüssel, gemäß diesem Ausführungsbeispiel ein symmetrischer Schlüssel, gebildet und in einem Speicher des Mobilfunknetz-Rechners 102 gespeichert.

Unter Verwendung der Zufallszahl 105 bildet das mobile Kommunikationsgerät 101 den Sitzungsschlüssel 107, speichert diesen und sendet eine zweite Registrierungs-Anforderungsnachricht 108 an den Mobilfunknetz-Rechner 102.

Eine Authentifikations-Bestätigungsnachricht 109 wird zum Abschluss der Authentifikationsphase von dem Mobilfunknetz-Rechner 102 an das mobile Kommunikations-Endgerät 101 zur Bestätigung der erfolgreichen Authentifikation des mobilen Kommunikations-Endgeräts 101 bei dem Mobilfunknetz übertragen.

Es ist in diesem Zusammenhang anzumerken, dass die Authentifikationsdaten 108 und die netzseitigen Berechnungen im Rahmen der Authentifikation sowohl von dem Mobilfunknetz-Rechner 102 selbst als auch von weiteren Rechnern, beispielsweise im Heimatnetz des Besitzers des mobilen Kommunikations-Endgeräts 101 befindlichen Rechnern durchgeführt werden können.

Im Rahmen der eigentlichen Aushandlung der Sicherheitsbeziehungen sendet, wie in Figur 1b dargestellt, das mobile Kommunikations-Endgerät 101 eine Registrierungsnachricht 110 gemäß dem SIP an den Mobilfunknetz-Rechner 102.

In Beantwortung der Registrierungsnachricht 110 sendet der Mobilfunknetz-Rechner 102 in einer ersten SIP-Antwortnachricht 111 vom Typ "Unauthorized" an das mobile Kommunikations-Endgerät 101 unter anderem insbesondere eine weitere Zufallszahl 112 sowie Authentifikationsdaten 113 als auch eine Liste 114 von zur Auswahl stehenden Sicherheitsbeziehungen.

Gemäß diesem Ausführungsbeispiel sind in der Liste 114 mit möglichen Sicherheitsbeziehungen zwei mögliche Sicherheitsbeziehungen vorgeschlagen:
- Erste mögliche Sicherheitsbeziehung:
   - Integritätsalgorithmus SHA-1
   - erster Sicherheitsparameter-Index zur Identifikation der ersten Sicherheitsbeziehung,
   - ein Gültigkeitszeitraum für die erste Sicherheitsbeziehung für 8 Stunden,
- Zweite mögliche Sicherheitsbeziehung:
   - Integritätsalgorithmus MD5,
   - zweiter Sicherheitsparameter-Index zur Identifizierung der zweiten Sicherheitsbeziehung,
   - Gültigkeitszeitraum von 4 Stunden für die zweite Sicherheitsbeziehung.

Die Sicherheitsbeziehungen werden gemäß diesem Ausführungsbeispiel gemäß dem Format, wie es in [3] spezifiziert ist, codiert. Die codierten Sicherheitsbeziehungen werden in den SIP-Nachrichten jeweils transparent als deren Nutzdaten übertragen.

Von dem mobilen Kommunikations-Endgerät 102 wird eine gewünschte Sicherheitsbeziehung mit den darin bestimmten kryptographischen Parametern ausgewählt und das mobile Kommunikations-Endgerät 102 sendet die ausgewählte Sicherheitsbeziehung 115 in einer weiteren SIP-Nachricht 116 als Sicherheitsbeziehungs-Nutzdaten an den Mobilfunknetz-Rechner 102 zurück.

Von dem Mobilfunknetz-Rechner 102 wird eine Bestätigungsnachricht 117 gebildet, die als Nutzdaten die List der Sicherheitsbeziehungen 114 noch einmal enthält. Die Bestätigungsnachricht 116 wird gemäß der ausgewählten Sicherheitsbeziehung kryptographisch gesichert, insbesondere gemäß dem in der ausgewählten Sicherheitsbeziehung definierten Integritätsschutzverfahren unter Verwendung des zuvor im Rahmen der Authentifikation generierten Sitzungsschlüssels integritätsgeschützt.

Die Bestätigungsnachricht 117 wird von dem Mobilfunknetz-Rechner 102 zu dem mobilen Kommunikations-Endgerät 101 übertragen und dort verifiziert.

**Fig.1c** zeigt eine anschließend aufgebaute Kommunikationsverbindung zur Übertragung von Nutzdaten zwischen dem mobilen Kommunikations-Endgerät 101 und dem Mobilfunknetz-Rechner 102, wobei die Nutzdaten 119 unter Verwendung der kryptographischen Sicherheitsmechanismen, wie sie in der ausgewählten Sicherheitsbeziehung 118 definiert sind, geschützt sind.

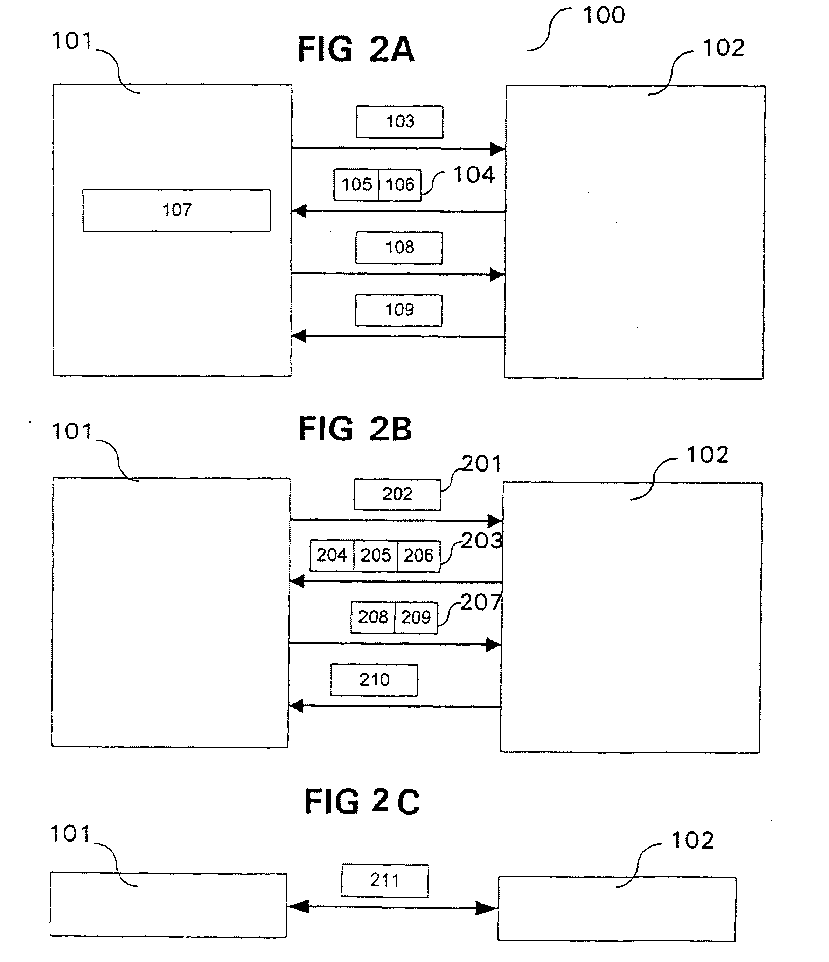

**Fig.2a** bis **Fig.2c** zeigen ein erfindungsgemäßes System 200 und die im Rahmen des Aushandelns der Sicherheitsbeziehungen verwendeten Nachrichten gemäß einem zweiten Ausführungsbeispiel der Erfindung.

Identische Elemente in dem ersten Ausführungsbeispiel und in dem zweiten Ausführungsbeispiel sind in den Figuren mit identischen Bezugszeichen versehen.

Die Authentifikationsphase gemäß **Fig.2a** ist identisch mit der gemäß dem ersten Ausführungsbeispiel durchgeführten Authentifikation des mobilen Kommunikations-Endgerätes 101 und des Mobilfunknetz-Rechners 102 in dem Kommunikationssystem 200.

Gemäß **Fig.2b** wird in einer Registrierungsnachricht 201 von dem mobilen Kommunikations-Endgerät 101 eine Aushandlung einer Sicherheitsbeziehung angestoßen, wobei gemäß diesem Ausführungsbeispiel schon in der Registrierungsnachricht 201 eine Liste 202 möglicher Sicherheitsbeziehungen enthalten ist.

Gemäß diesem Ausführungsbeispiel sind in der Liste 202 mit möglichen Sicherheitsbeziehungen zwei mögliche Sicherheitsbeziehungen vorgeschlagen:
- Erste mögliche Sicherheitsbeziehung:
   - Integritätsalgorithmus SHA-1
   - erster Sicherheitsparameter-Index zur Identifikation der ersten Sicherheitsbeziehung,
   - ein Gültigkeitszeitraum für die erste Sicherheitsbeziehung für 8 Stunden,
- Zweite mögliche Sicherheitsbeziehung:
   - Integritätsalgorithmus MD5,
   - zweiter Sicherheitsparameter-Index zur Identifizierung der zweiten Sicherheitsbeziehung,
   - Gültigkeitszeitraum von 4 Stunden für die zweite Sicherheitsbeziehung.

Die Sicherheitsbeziehungen werden gemäß diesem Ausführungsbeispiel gemäß dem Format, wie es in [3] spezifiziert ist, codiert. Die codierten Sicherheitsbeziehungen werden in den SIP-Nachrichten jeweils transparent als deren Nutzdaten übertragen.

Anschaulich bedeutet dies für das zweite Ausführungsbeispiel, dass die möglichen Sicherheitsbeziehungen nunmehr von dem mobilen Kommunikations-Endgerät 101 vorgeschlagen werden und nicht, wie gemäß dem ersten Ausführungsbeispiel, von dem Mobilfunknetz-Rechner 102.

Nach Empfang der Registrierungsnachricht 201 mit der Liste 202 möglicher Sicherheitsbeziehungen generiert und übermittelt der Mobilfunknetz-Rechner 102 eine Antwortnachricht 203, welche eine Zufallszahl 204, eine Authentifikationsangabe 205 sowie die von dem Mobilfunknetz-Rechner 102 ausgewählte Sicherheitsbeziehung 206 enthält.

Nach erfolgter Registrierung übermittelt das mobile Kommunikations-Endgerät 101 in einer weiteren Registrierungsnachricht 207 sowohl Antwortparameter 208 als auch die gemäß der ausgewählten Sicherheitsbeziehung nunmehr gesicherte, das heißt gemäß dem Verfahren aus der ausgewählten Sicherheitsbeziehung integritätsgeschützte Liste der Sicherheitsbeziehungen 202.

Nach ihrem Empfang wird die integritätsgeschützte ausgewählte Sicherheitsbeziehung von dem Netzwerk-Rechner 102 verifiziert.

Nach erfolgreicher Verifikation der ausgewählten Sicherheitsbeziehung wird eine Bestätigungsnachricht 210 an das mobile Kommunikations-Endgerät 101 übertragen.

**Fig.2c** zeigt nunmehr in Übereinstimmung mit **Fig.1c** gemäß dem ersten Ausführungsbeispiel die aufgebaute Kommunikationsverbindung zwischen dem mobilen Kommunikations-Endgerät 101 und dem Mobilfunknetz-Rechner 102 und den Austausch von unter Verwendung der ausgewählten Sicherheitsbeziehung 209 kryptographisch gesicherten Nutzdaten 211.

Es ist in diesem Zusammenhang anzumerken, dass es gemäß einer weiteren Ausführungsform der Erfindung vorgesehen ist, dass die Sicherheitsbeziehungen so erstellt werden, dass für die Anforderungsnachrichten bzw. Registrierungsnachrichten ein kryptographischer Schutz verwendet wird, das heißt dass ein kryptographischer Schutz verwendet wird für die Kommunikation ausgehend von dem mobilen Kommunikations-Endgerät 101 zu dem Mobilfunknetz-Rechner 102, die Kommunikation von dem Mobilfunknetz-Rechner 102 selbst zu dem mobilen Kommunikations-Endgerät 101 jedoch kryptographisch ungeschützt bleibt.

Dies bedeutet, dass es ermöglicht wird, in Abhängigkeit von der Kommunikationsrichtung einer Kommunikationsverbindung im Rahmen einer Sicherheitsbeziehung zwischen zwei Rechnern unterschiedliche Schutzmechanismen ausgehandelt werden können. Es können pro Kommunikationsverbindung zwischen zwei Rechnern mehrere, grundsätzlich eine beliebige Anzahl von Sicherheitsbeziehungen ausgehandelt werden, sogar auf der Ebene von Netzwerk-Port, d.h. dass sogar für jede logische Kommunikationsverbindung über zwei einander in einer Kommunikationsverbindung zugeordnete Ports mehrere unterschiedliche, vorzugsweise jeweils zwei, Sicherheitsbeziehungen ausgehandelt, gespeichert und verwendet werden.

Zusammengefasst sind im Weiteren wesentliche Vorteile der oben beschriebenen Erfindung:
- Es wird die Aushandlung von IPsec-Sicherheitsbeziehungen innerhalb von SIP-Nachrichten unterstützt, ohne dass zusätzliche SIP-Nachrichten für die Aushandlung von Sicherheitsbeziehungen benötigt werden.
- Eine Implementierung der Erfindung ist sehr effizient ermöglicht insbesondere bei mobilen Kommunikations-Endgeräten mit einer geringen Rechenleistung, womit ein gemäß dem Stand der Technik bisher offenes Problem gelöst wird. In diesem Zusammenhang findet die Aushandlung der Sitzungsschlüssel vorzugsweise unabhängig von der eigentlichen Aushandlung der Sicherheitsbeziehung statt, das heißt, die Erfindung ist unabhängig von dem bereitgestellten Verfahren zur Authentifikation der Kommunikationspartner. Es ist möglich, ein Authentifikationsverfahren alternativ zu dem oben beschriebenen Authentifikationsverfahren gemäß [3] zu verwenden, das ursprünglich nicht zur Aushandlung von IPsec-Sicherheitsbeziehungen bestimmt ist. Diese Authentifikationsmechanismen können dann im Kombination mit dem oben beschriebenen Verfahren zum Aushandeln von IPsec-Sicherheitsbeziehungen verwendet werden.
- Ferner unterstützt die Erfindung das unidirektionale Konzept der IPsec-Sicherheitsbeziehungen und den Austausch von SIP-Nachrichten. Durch die Erfindung wird es möglich, Sicherheitsbeziehungen mit verschiedenen Inhalten zur Sicherung einer einzelnen Kommunikationsverbindung auszuhandeln. Damit ist es beispielsweise möglich, nur SIP-Requests, das heißt Anforderungsnachrichten, zu schützen und SIP-Responses ungeschützt zu übertragen, wodurch eine erhebliche Optimierung hinsichtlich der kryptographischen Anforderungen bezüglich der verfügbaren Bandbreite und Rechenleistung ermöglicht wird.

In diesem Dokument sind folgende Veröffentlichungen zitiert:
[1] Timestep, Understanding the IPsec Protocol Suite, Secure Virtual Private Network Solutions, Timestep Corporation, Dezember 1998
[2] IETF RFC 2407: IP Security Domain of Interpretation
[3] IETF RFC 2409: The Internet Key Exchange (IKE)
[4] Internet Engineering Task Force: Draft-IETF-KINK-KINK-00.txt
[5] IETF RFC 2543: Session Initiation Protocol
[6] Ericsson, Nokia and Nortel, Security Mode Setup for the IMS Registration, 3GPP TSG SA WG 3 Security-S3##19, S3-010326, 4.-6. Juli 2001-08-07
[7] 3GPP TSG SA WG 2: TS 23.228: Service Requirements for the IP Multimedia Core Network Subsystem
[8] 3GPP T SG SA WG 3 Security: TS 33.203, Access Security for IP-Based Services (Release 5), v 0.4.0, 06/2001

## Patentansprüche

1. Verfahren zum rechnergestützten Aushandeln einer Sicherheitsbeziehung auf der Anwendungsschicht zwischen einem ersten Rechner und einem zweiten Rechner, wobei der erste Rechner und der zweite Rechner über ein Telekommunikationsnetz miteinander gekoppelt sind,
• bei dem der erste Rechner in einer Nachricht gemäß einem Protokoll der Anwendungsschicht eine Liste möglicher Sicherheitsbeziehungen zwischen dem ersten Rechner und dem zweiten Rechner an den zweiten Rechner überträgt, wobei zu jeder in der Liste enthaltenen Sicherheitsbeziehung ein Sicherheitsparameter-Index enthalten und dieser Sicherheitsbeziehung zugeordnet ist, mit welchem Sicherheitsparameter-Index die jeweilige Sicherheitsbeziehung der Liste identifizierbar ist,
• bei dem mit der Sicherheitsbeziehung jeweils für eine unter Verwendung der Sicherheitsbeziehung aufzubauende kryptographisch gesicherte Kommunikationsverbindung in einer Netzwerkschicht verwendete kryptographische Parameter bestimmt werden,
• bei dem von dem zweiten Rechner eine Sicherheitsbeziehung ausgewählt wird, und
• bei dem der zweite Rechner die von ihm ausgewählte Sicherheitsbeziehung oder eine Angabe über die von ihm ausgewählte Sicherheitsbeziehung an den ersten Rechner überträgt.

2. Verfahren nach Anspruch 1,
bei dem der erste Rechner ein mobiles Kommunikations-Endgerät und der zweite Rechner ein Mobilfunknetz-Rechner ist.

3. Verfahren nach Anspruch 1,
bei dem der erste Rechner ein Mobilfunknetz-Rechner und der zweite Rechner ein mobiles Kommunikations-Endgerät ist.

4. Verfahren nach einem der Ansprüche 1 bis 3,
bei dem das Telekommunikationsnetz ein Mobilfunk-Telekommunikationsnetz ist.

5. Verfahren nach einem der Ansprüche 2 bis 4,
• bei dem das mobile Kommunikations-Endgerät eine Registrierungsnachricht gemäß dem Protokoll der Anwendungsschicht an den Mobilfunknetz-Rechner überträgt, und
• bei dem der Mobilfunknetz-Rechner eine Authentifikationsnachricht gemäß dem Protokoll der Anwendungsschicht an das mobile Kommunikations-Endgerät überträgt.

6. Verfahren nach einem der Ansprüche 1 bis 5,
bei dem der zweite Rechner eine Bestätigungsnachricht an den ersten Rechner überträgt, mit welcher Bestätigungsnachricht die Angabe über die ausgewählte Sicherheitsbeziehung oder die ausgewählte Sicherheitsbeziehung für eine zukünftige Kommunikationsverbindung bestätigt wird.

7. Verfahren nach Anspruch 6,
bei dem die Bestätigungsnachricht die ausgewählte Sicherheitsbeziehung in gemäß der ausgewählten Sicherheitsbeziehung kryptographisch gesicherter Form enthält.

8. Verfahren nach Anspruch 7,
bei dem die ausgewählte Sicherheitsbeziehung in der Bestätigungsnachricht gemäß dem in der ausgewählten Sicherheitsbeziehung bestimmten Integritätsschutz-Verfahren gesichert ist.

9. Verfahren nach einem der Ansprüche 6 bis 8,
• bei dem die Bestätigungsnachricht von dem zweiten Rechner verifiziert wird, und
• bei dem eine Kommunikation unter Verwendung der ausgewählten Sicherheitsbeziehung nur aufgebaut wird, wenn die Überprüfung erfolgreich war.

10. Verfahren nach einem der Ansprüche 1 bis 9,
bei dem zu Beginn des Verfahrens zwischen dem ersten Rechner und dem zweiten Rechner eine gegenseitige Authentifikation durchgeführt wird.

11. Verfahren nach Anspruch 10,
bei dem im Rahmen der Authentifikation ein Sitzungsschlüssel ausgetauscht wird zwischen dem ersten Rechner und dem zweiten Rechner, welcher Sitzungsschlüssel im Rahmen der im Weiteren ausgewählten Sicherheitsbeziehung verwendet wird.

12. Verfahren nach Anspruch 11,
bei dem aus dem Sitzungsschlüssel ein weiterer Schlüssel abgeleitet wird, welcher im Rahmen der im Weiteren ausgewählten Sicherheitsbeziehung verwendet wird.

13. Verfahren nach einem der Ansprüche 1 bis 12,
bei dem die Sicherheitsbeziehungen gemäß dem Format des Internet Key Exchange-Protokolls (IKE) codiert werden.

14. Verfahren nach einem der Ansprüche 1 bis 13,
bei dem die Sicherheitsbeziehungen zur Sicherung einer Kommunikationsbeziehung gemäß IPsec verwendet werden.

15. Verfahren nach einem der Ansprüche 1 bis 14,
bei dem als Protokoll der Netzwerkschicht zum Transport von Nutzdaten das Encapsulating Security Payload-Protokoll (ESP) verwendet wird.

16. Verfahren nach einem der Ansprüche 1 bis 15,
bei dem als Format des Protokolls der Anwendungsschicht eines der beiden folgenden Protokollformate verwendet wird:
• Protokollformat gemäß dem Session Initiation Protocol (SIP), oder
• Protokollformat gemäß dem Hypertext Transfer Protocol (HTTP).

17. Verfahren nach einem der Ansprüche 1 bis 16,
bei dem der Sicherheitsparameter-Index in dem Signalisierungsteil einer jeweiligen Nachricht gemäß dem Format des Protokolls der Anwendungsschicht übertragen wird.

18. Verfahren nach einem der Ansprüche 1 bis 17,
bei dem die Sicherheitsbeziehung die in einer Netzwerkschicht zu verwendenden kryptographischen Parameter für eine unidirektionale Kommunikationsverbindung bestimmt.

19. System zum rechnergestützten Aushandeln einer Sicherheitsbeziehung auf der Anwendungsschicht zwischen einem ersten Rechner und einem zweiten Rechner, wobei der erste Rechner und der zweite Rechner über ein Telekommunikationsnetz miteinander gekoppelt sind,
bei dem der erste Rechner und der zweite Rechner jeweils eine Prozessoreinheit aufweisen, die derart eingerichtet sind, dass die im Weiteren beschriebenen Verfahrensschritte durchführbar sind:
• der erste Rechner überträgt in einer Nachricht gemäß einem Protokoll der Anwendungsschicht eine Liste möglicher Sicherheitsbeziehungen zwischen dem ersten Rechner und dem zweiten Rechner an den zweiten Rechner, wobei zu jeder in der Liste enthaltenen Sicherheitsbeziehung ein Sicherheitsparameter-Index enthalten und dieser Sicherheitsbeziehung zugeordnet ist, mit welchem Sicherheitsparameter-Index die jeweilige Sicherheitsbeziehung der Liste identifizierbar ist,
• mit der Sicherheitsbeziehung werden jeweils für eine unter Verwendung der Sicherheitsbeziehung aufzubauende kryptographisch gesicherte Kommunikationsverbindung in einer Netzwerkschicht verwendete kryptographische Parameter bestimmt,
• von dem zweiten Rechner wird eine Sicherheitsbeziehung ausgewählt, und
• der zweite Rechner überträgt die von ihm ausgewählte Sicherheitsbeziehung oder eine Angabe über die von ihm ausgewählte Sicherheitsbeziehung an den ersten Rechner.

20. Rechner zum Aushandeln einer Sicherheitsbeziehung auf der Anwendungsschicht zwischen dem Rechner und einem weiteren Rechner, wobei der Rechner mit dem weiteren Rechner über ein Telekommunikationsnetz gekoppelt ist,
bei dem der Rechner einen Prozessor aufweist, der derart eingerichtet ist, dass folgende Verfahrensschritte durchführbar sind:
• der Rechner überträgt in einer Nachricht gemäß einem Protokoll der Anwendungsschicht eine Liste möglicher Sicherheitsbeziehungen zwischen dem Rechner und dem weiteren Rechner an den weiteren Rechner, wobei zu jeder in der Liste enthaltenen Sicherheitsbeziehung ein Sicherheitsparameter-Index enthalten und dieser Sicherheitsbeziehung zugeordnet ist, mit welchem Sicherheitsparameter-Index die jeweilige Sicherheitsbeziehung der Liste identifizierbar ist,
• wobei mit der Sicherheitsbeziehung jeweils für eine unter Verwendung der Sicherheitsbeziehung aufzubauende kryptographisch gesicherte Kommunikationsverbindung in einer Netzwerkschicht verwendete kryptographische Parameter bestimmt werden,
• von dem weiteren Rechner wird die von dem weiteren Rechner ausgewählte Sicherheitsbeziehung oder eine Angabe über die von dem weiteren Rechner ausgewählte Sicherheitsbeziehung aus der Liste der Sicherheitsbeziehungen empfangen.

21. Rechner nach Anspruch 20,
ausgestaltet als Mobilfunknetz-Rechner.

22. Rechner nach Anspruch 20,
ausgestaltet als mobiles Kommunikations-Endgerät.

23. Rechner zum Aushandeln einer Sicherheitsbeziehung auf der Anwendungsschicht zwischen einem weiteren Rechner und dem Rechner, wobei der weitere Rechner und der Rechner über ein Telekommunikationsnetz miteinander gekoppelt sind,
bei dem der Rechner einen Prozessor aufweist, der derart eingerichtet ist, dass folgende Verfahrensschritte durchführbar sind:
• von dem Rechner wird eine Nachricht gemäß einem Protokoll der Anwendungsschicht empfangen, in welcher Nachricht eine Liste möglicher Sicherheitsbeziehungen zwischen dem weiteren Rechner und dem Rechner enthalten sind, wobei zu jeder in der Liste enthaltenen Sicherheitsbeziehung ein Sicherheitsparameter-Index enthalten und dieser Sicherheitsbeziehung zugeordnet ist, mit welchem Sicherheitsparameter-Index die jeweilige Sicherheitsbeziehung der Liste identifizierbar ist,
• mit der Sicherheitsbeziehung werden jeweils für eine unter Verwendung der Sicherheitsbeziehung aufzubauende kryptographisch gesicherte Kommunikationsverbindung in einer Netzwerkschicht verwendete kryptographische Parameter bestimmt,
• von dem Rechner wird eine Sicherheitsbeziehung ausgewählt, und
• der Rechner überträgt die von ihm ausgewählte Sicherheitsbeziehung oder eine Angabe über die von ihm ausgewählte Sicherheitsbeziehung an den weiteren Rechner.

24. Rechner nach Anspruch 23,
ausgestaltet als Mobilfunknetz-Rechner.

25. Rechner nach Anspruch 23,
ausgestaltet als mobiles Kommunikations-Endgerät.

## Claims

1. Method for the computer-aided negotiation of a security association on the application layer between a first computer and a second computer, the first computer and the second computer being coupled to one another via a telecommunication network,
• in which the first computer transmits a list of possible security associations between the first computer and the second computer to the second computer in a message according to a protocol of the application layer, a security parameter index being contained for each security association contained in the list and assigned to this security association, with which security parameter index it is possible to identify the respective security association of the list,
• in which the security association is used for respectively determining cryptographic parameters used for a cryptographically protected communication link in a network layer, to be set up using the security association,
• in which a security association is selected by the second computer, and
• in which the second computer transmits the security association selected by it or an indication of the security association selected by it to the first computer.

2. Method according to Claim 1,
in which the first computer is a mobile communication terminal and the second computer is a mobile radio network computer.

3. Method according to Claim 1,
in which the first computer is a mobile radio network computer and the second computer is a mobile communication terminal.

4. Method according to one of Claims 1 to 3,
in which the telecommunication network is a mobile radio telecommunication network.

5. Method according to one of Claims 2 to 4,
• in which the mobile communication terminal transmits a registration message according to the protocol of the application layer to the mobile radio network computer, and
• in which the mobile radio network computer transmits an authentication message according to the protocol of the application layer to the mobile communication terminal.

6. Method according to one of Claims 1 to 5,
in which the second computer transmits an acknowledgement message to the first computer, with which acknowledgement message the indication of the selected security association or the selected security association for a future communication link is confirmed.

7. Method according to Claim 6,
in which the acknowledgement message contains the selected security association in a form cryptographically protected according to the selected security association.

8. Method according to Claim 7,
in which the selected security association is protected in the acknowledgement message according to the integrity protection method determined in the selected security association.

9. Method according to one of Claims 6 to 8,
• in which the acknowledgement message is verified by the second computer, and
• in which a communication is set up using the selected security association only if the verification was successful.

10. Method according to one of Claims 1 to 9,
in which, at the beginning of the method, a reciprocal authentication is carried out between the first computer and the second computer.

11. Method according to Claim 10,
in which, within the authentication, a session key is exchanged between the first computer and the second computer, which session key is used within the security association selected thereafter.

12. Method according to Claim 11,
in which the session key is used to derive a further key, which is used within the security association selected thereafter.

13. Method according to one of Claims 1 to 12,
in which the security associations are coded according to the format of the Internet Key Exchange protocol (IKE).

14. Method according to one of Claims 1 to 13,
in which the security associations are used for protecting a communication relationship according to IPsec.

15. Method according to one of Claims 1 to 14,
in which the Encapsulating Security Payload protocol (ESP) is used as the protocol of the network layer for transporting user data.

16. Method according to one of Claims 1 to 15,
in which one of the two following protocol formats is used as the format of the protocol of the application layer:
• protocol format according to the Session Initiation Protocol (SIP), or
• protocol format according to the Hypertext Transfer Protocol (HTTP).

17. Method according to one of Claims 1 to 16,
in which the security parameter index is transmitted in the signalling part of a respective message according to the format of the protocol of the application layer.

18. Method according to one of Claims 1 to 17,
in which the security association determines the cryptographic parameters to be used in a network layer for a unidirectional communication link.

19. System for the computer-aided negotiation of a security association on the application layer between a first computer and a second computer, with the first computer and the second computer being coupled to one another via a telecommunication network,
in which the first computer and the second computer have in each case a processor unit, which are set up in such a way that the method steps described below can be carried out:
• the first computer transmits a list of possible security associations between the first computer and the second computer to the second computer in a message according to a protocol of the application layer, a security parameter index being contained for each security association contained in the list and assigned to this security association, with which security parameter index it is possible to identify the respective security association of the list,
• the security association is used for respectively determining cryptographic parameters used for a cryptographically protected communication link in a network layer, to be set up using the security association,
• a security association is selected by the second computer, and
• the second computer transmits the security association selected by it or an indication of the security association selected by it to the first computer.

20. Computer for negotiating a security association on the application layer between the computer and a further computer, the computer being coupled to the further computer via a telecommunication network, in which the computer has a processor, which is set up in such a way that the following method steps can be carried out:
• the computer transmits a list of possible security associations between the computer and the further computer to the further computer in a message according to a protocol of the application layer, a security parameter index being contained for each security association contained in the list and assigned to this security association, with which security parameter index it is possible to identify the respective security association of the list,
• the security association being used for respectively determining cryptographic parameters used for a cryptographically protected communication link in a network layer, to be set up using the security association,
• the security association selected by the further computer or an indication of the security association selected by the further computer from the list of security associations is received by the further computer.

21. Computer according to Claim 20,
in the form of a mobile radio network computer.

22. Computer according to Claim 20,
in the form of a mobile communication terminal.

23. Computer for negotiating a security association on the application layer between a further computer and the computer, the further computer and the computer being coupled to one another via a telecommunication network,
in which the computer has a processor, which is set up in such a way that the following method steps can be carried out:
• the computer receives a message according to a protocol of the application layer, in which message a list of possible security associations between the further computer and the computer is contained, a security parameter index being contained for each security association contained in the list and assigned to this security association, with which security parameter index it is possible to identify the respective security association of the list,
• the security association being used for respectively determining cryptographic parameters used for a cryptographically protected communication link in a network layer, to be set up using the security association,
• a security association is selected by the computer, and
• the computer transmits the security association selected by it or an indication of the security association selected by it to the further computer.

24. Computer according to Claim 23,
in the form of a mobile radio network computer.

25. Computer according to Claim 23,
in the form of a mobile communication term

## Revendications

1. Procédé pour négocier de manière assistée par ordinateur une association de sécurité au niveau de la couche application entre un premier et un second ordinateur, le premier et le second ordinateur étant interconnectés via un réseau de télécommunication,
• dans lequel le premier ordinateur transmet au second ordinateur dans un message selon un protocole de la couche application une liste d'associations de sécurité possibles entre le premier et le second ordinateur, un indice de paramètre de sécurité étant contenu pour chaque association de sécurité incluse dans la liste et affecté à cette association de sécurité, avec lequel indice de paramètre de sécurité l'association de sécurité correspondante de la liste est identifiable,
• dans lequel avec l'association de sécurité les paramètres cryptographiques utilisés dans une couche réseau sont déterminés pour chaque liaison de communication sécurisée par des moyens cryptographiques à établir en utilisant l'association de sécurité,
• dans lequel une association de sécurité est choisie par le second ordinateur, et
• dans lequel le second ordinateur transmet au premier ordinateur l'association de sécurité sélectionnée par lui ou une indication sur l'association de sécurité choisie par lui.

2. Procédé selon la revendication 1,
dans lequel le premier ordinateur est un terminal de communication mobile et le second ordinateur un ordinateur de réseau de téléphonie mobile.

3. Procédé selon la revendication 1,
dans lequel le premier ordinateur est un ordinateur de réseau de téléphonie mobile et le second ordinateur un terminal de communication mobile.

4. Procédé selon l'une des revendications 1 à 3,
dans lequel le réseau de télécommunication est un réseau de télécommunication de téléphonie mobile.

5. Procédé selon l'une des revendications 2 à 4,
• dans lequel le terminal de communication mobile transmet un message d'enregistrement à l'ordinateur de réseau de téléphonie mobile selon le protocole de la couche application, et
• dans lequel l'ordinateur de réseau de téléphonie mobile transmet un message d'authentification au terminal de communication mobile selon le protocole de la couche application.

6. Procédé selon l'une des revendications 1 à 5,
dans lequel le second ordinateur transmet un accusé de réception au premier ordinateur, avec lequel accusé de réception l'indication sur l'association de sécurité choisie ou l'association de sécurité choisie pour une liaison de communication future est confirmée.

7. Procédé selon la revendication 6,
dans lequel l'accusé de réception contient l'association de sécurité choisie sous la forme sécurisée par des moyens cryptographiques selon l'association de sécurité choisie.

8. Procédé selon la revendication 7,
dans lequel l'association de sécurité choisie est sécurisée dans l'accusé de réception selon le procédé de protection de l'intégrité déterminé dans l'association de sécurité choisie.

9. Procédé selon l'une des revendications 6 à 8,
• dans lequel l'accusé de réception est vérifié par le second ordinateur, et
• dans lequel une communication en utilisant l'association de sécurité choisie ne peut être établie que si le contrôle s'est avéré fructueux.

10. Procédé selon l'une des revendications 1 à 9,
dans lequel au début de la procédure une authentification mutuelle est effectuée entre le premier et le second ordinateur.

11. Procédé selon la revendication 10,
dans lequel, dans le cadre de l'authentification, un code de session est échangé entre le premier et le second ordinateur, lequel code de session est utilisé dans le cadre de l'association de sécurité choisie par la suite.

12. Procédé selon la revendication 11,
dans lequel un autre code est dérivé du code de session, lequel est utilisé dans le cadre de l'association de sécurité choisie par la suite.

13. Procédé selon l'une des revendications 1 à 12,
dans lequel les associations de sécurité sont codées selon le format du protocole "Internet Key Exchange" (IKE).

14. Procédé selon l'une des revendications 1 à 13,
dans lequel les associations de sécurité pour sécuriser une relation de communication sont utilisées selon IPsec.

15. Procédé selon l'une des revendications 1 à 14,
dans lequel le protocole Encapsulating Security Payload (ESP) est utilisé comme protocole de la couche réseau pour le transport de données utiles.

16. Procédé selon l'une des revendications 1 à 15, dans lequel l'un des formats de protocole suivant est utilisé comme format du protocole de la couche application :
• Format de protocole selon le protocole "Session Initiation Protocol" (SIP) ou
• Format de protocole selon le protocole "Hypertext Transfer Protocol" (HTTP).

17. Procédé selon l'une des revendications 1 à 16,
dans lequel l'indice de paramètre de sécurité est transmis dans la partie signalisation d'un message correspondant selon le format du protocole de la couche application.

18. Procédé selon l'une des revendications 1 à 17,
dans lequel l'association de sécurité détermine les paramètres cryptographiques à utiliser dans une couche réseau pour une liaison de communication unidirectionnelle.

19. Système pour négocier de manière assistée par ordinateur une association de sécurité au niveau de la couche application entre un premier et un second ordinateur, le premier et le second ordinateur étant interconnectés via un réseau de télécommunication, dans lequel le premier et le second ordinateur présentent chacun une unité de traitement, configurée de telle sorte que les étapes de procédé décrites ci-après peuvent être exécutées :
• le premier ordinateur transmet au second ordinateur dans un message selon un protocole de la couche application une liste d'associations de sécurité possibles entre le premier et le second ordinateur, un indice de paramètre de sécurité étant contenu pour chaque association de sécurité incluse dans la liste et affecté à cette association de sécurité, avec lequel indice de paramètre de sécurité l'association de sécurité correspondante de la liste est identifiable,
• avec l'association de sécurité les paramètres cryptographiques utilisés dans une couche réseau sont déterminés pour chaque liaison de communication sécurisée par des moyens cryptographiques à établir en utilisant l'association de sécurité,
• le second ordinateur choisit une association de sécurité, et
• le second ordinateur transmet au premier ordinateur l'association de sécurité choisie par lui ou une indication sur l'association de sécurité choisie par lui.

20. Ordinateur pour négocier une association de sécurité au niveau de la couche application entre l'ordinateur et un autre ordinateur, l'ordinateur étant interconnecté à l'autre ordinateur via un réseau de télécommunication, dans lequel l'ordinateur présente un processeur configuré de telle sorte que les étapes suivantes de procédé peuvent être exécutées :
• l'ordinateur transmet à l'autre ordinateur dans un message selon un protocole de la couche application une liste d'associations de sécurité possibles entre l'ordinateur et l'autre ordinateur, un indice de paramètre de sécurité étant contenu pour chaque association de sécurité incluse dans la liste et affecté à cette association de sécurité, avec lequel indice de paramètre de sécurité l'association de sécurité correspondante de la liste est identifiable,
• avec l'association de sécurité, les paramètres cryptographiques utilisés dans une couche réseau étant déterminés pour chaque liaison de communication sécurisée par des moyens cryptographiques à établir en utilisant l'association de sécurité,
• l'association de sécurité choisie par l'autre ordinateur ou une indication sur l'association de sécurité choisie par l'autre ordinateur à partir de la liste d'associations de sécurité est reçue par l'autre ordinateur.

21. Ordinateur selon la revendication 20,
conçu comme ordinateur de réseau de téléphonie mobile.

22. Ordinateur selon la revendication 20,
conçu comme terminal de communication mobile.

23. Ordinateur pour négocier une association de sécurité au niveau de la couche application entre un autre ordinateur et l'ordinateur, l'autre ordinateur et l'ordinateur étant interconnectés via un réseau de télécommunication, dans lequel l'ordinateur présente un processeur configuré de telle sorte que les étapes suivantes de procédé peuvent être exécutées :
• Un message selon un protocole de la couche application est reçu par l'ordinateur, dans lequel message une liste d'associations de sécurité possibles entre l'autre ordinateur et l'ordinateur est contenue, un indice de paramètre de sécurité étant contenu pour chaque association de sécurité incluse dans la liste et affecté à cette association de sécurité, avec lequel indice de paramètre de sécurité l'association de sécurité correspondante de la liste est identifiable,
• avec l'association de sécurité les paramètres cryptographiques utilisés dans une couche réseau sont déterminés pour chaque liaison de communication sécurisée par des moyens cryptographiques à établir en utilisant l'association de sécurité,
• une association de sécurité est choisie par l'ordinateur, et
• l'ordinateur transmet à l'autre ordinateur l'association de sécurité choisie par lui ou une indication sur l'association de sécurité choisie par lui.

24. Ordinateur selon la revendication 23,
conçu comme ordinateur de réseau de téléphonie mobile.

25. Ordinateur selon la revendication 23,
conçu comme terminal de communication mobile.
